# EUROPÄISCHE PATENTSCHRIFT

(11) **EP 3 191 315 B1**
(45) Veröffentlichungstag und Bekanntmachung des Hinweises auf die Patenterteilung: **17.04.2019**
(21) Anmeldenummer: 15757519.2
(22) Anmeldetag: 08.09.2015
(51) Int. Cl.: B60B 35/08, B60B 35/06, B60B 25/06

(54) **ACHSEINHEIT**
AXLE UNIT
UNITÉ D'ESSIEU

(30) Priorität: 12.09.2014 DE 102014218328
(43) Veröffentlichungstag der Anmeldung: 19.07.2017
(73) Patentinhaber: SAF-HOLLAND GmbH, 63856 Bessenbach-Keilberg (DE)
(72) Erfinder: CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2015/070439
(87) Internationale Veröffentlichungsnummer: WO 2016/038003

(56) Entgegenhaltungen:
- FR-A1- 2 837 775
- US-A- 3 792 434
- US-A1- 2010 225 157

## Beschreibung

Die vorliegende Erfindung betrifft eine Achseinheit insbesondere zum Einsatz in Nutzfahrzeugen.

Achseinheiten sind aus dem Stand der Technik hinlänglich bekannt. Es ist darüber hinaus bekannt, an Achseinheiten im Bereich der Radaufhängung Zusatzmotoren wie beispielsweise hydraulische Einzelradantriebe anzubringen, um beispielsweise einen Anhänger bei abgehängtem Zugfahrzeug rangieren zu können oder beispielsweise bei großen Steigungen und/oder großer Last zusätzliche Antriebskraft auf die einzelnen Räder übertragen zu können. Dabei ist in der Vergangenheit eine große Verbesserung bereits dadurch erreicht worden, die zur Versorgung des Zusatzantriebes mit entsprechendem Hydraulikfluid nötigen Leitungen in den Achskörper einer starren Achse zu integrieren. Da zweckmäßigerweise die Hydraulikleitungen über den nicht rotierenden Teil einer Radaufhängung an den Zusatzmotor herangeführt werden müssen und dies ohne die Integration der Hydraulikleitungen in den Achskörper bisher eine äußerst aufwendige, fehleranfällige und bauraumintensive Leitungsanordnung bedingte, wurden bisher Achskörper verwendet, welche in der Lage waren, Hydraulikleitungen aufzunehmen (Achsköper aus Vollmaterial). Bei diesen Achskörpern hat es sich jedoch als sehr nachteilig erwiesen, dass sie ein äußerst hohes Gewicht aufweisen. Darüber hinaus ist das Einbringen der Langlochbohrungen in den massiven Achskörper mit sehr großem Fertigungsaufwand verbunden. Es besteht somit ein Verbesserungsbedarf hinsichtlich der Gewichtsreduzierung von Achskörpern mit integrierten Hydraulikleitungen sowie hinsichtlich der Vereinfachung der Fertigung eines solchen Achskörpers.

US 3,792,434 A offenbart ein Temperaturüberwachungssystem, bei welchem die elektrischen Kabel der Temperatursensoren seitlich in den Achsstummel eingeführt sind.

US 2010/0225157 A1 zeigt eine Radaufhängung eines gelenkten Rades mit Kanälen zur Versorgung eines hydraulischen Zusatzmotors, wobei der Achsstummel mit einem Flansch versehen ist, welcher zur schwenkbaren Lagerung am Fahrzeug ausgelegt ist.

FR 2 837 775 A1 zeigt einen Achsdorn welcher in einen Flansch eingesteckt und über den Flansch an einem Fahrzeug festlegbar ist.

Aufgabe der vorliegenden Erfindung ist die Bereitstellung einer Achseinheit, welche ein geringeres Gewicht und eine einfachere Fertigung erlaubt und dabei die hohen Anforderungen an die Festigkeit und Dauerbelastbarkeit erfüllt.

Diese Aufgabe wird gelöst mit einer Achseinheit gemäß Anspruch 1. Weitere Vorteile und Merkmale der vorliegenden Erfindung ergeben sich aus den abhängigen Ansprüchen.

Erfindungsgemäß umfasst die Achseinheit ein Achsrohr und einen Achsstummel, wobei der Achsstummel bereichsweise rotationssymmetrisch zu einer Stummelachse ausgebildet ist und einen Kanal aufweist, welcher sich im Wesentlichen parallel zur Stummelachse erstreckt, wobei der Achsstummel einen ersten Anschlussabschnitt aufweist, welcher eine Eingriffsgeometrie zur fluidischen Verbindung mit dem Kanal aufweist, wobei das Achsrohr im Wesentlichen rotationssymmetrisch um eine Rohrachse ausgebildet ist, wobei das Achsrohr und der Achsstummel über eine Traverse derart zueinander, oder bevorzugt relativ zueinander oder vorzugsweise direkt oder indirekt aneinander festgelegt sind, dass die Rohrachse und die Stummelachse voneinander beabstandet sind. Die Achseinheit umfasst vorzugsweise ein hohlkörperförmiges Achsrohr, welches an einem in Längsrichtung angeordneten Ende an der Traverse entweder festgelegt ist oder vorzugsweise in die Traverse übergeht. Weiterhin umfasst die Achseinheit einen Achsstummel, welcher bereichsweise rotationssymmetrisch ausgebildet ist und insbesondere der Festlegung eines Rades oder eines Radlagers dient. Der Achsstummel ist an der Traverse festgelegt oder geht vorzugsweise in die Traverse über. In einer alternativ bevorzugten Ausführungsform ist die Traverse einstückig mit dem Achsrohr ausgebildet. Alternativ bevorzugt ist die Traverse einstückig mit dem Achsstummel ausgebildet. Das jeweils andere Element, Achsrohr oder Achsstummel, ist entsprechend an der Traverse festlegbar. Der Achsstummel weist einen Kanal auf, welcher insbesondere der Leitung von Hydraulikfluid dient. Der Kanal ist vorzugsweise als durch den Achsstummel verlaufende Längsbohrung ausgebildet. Dabei ist ein erstes Ende des Kanales vorzugsweise in einem ersten Anschlussabschnitt des Achsstummels angeordnet und ein zweites Ende des Kanals vorzugsweise an der gegenüberliegenden Seite des Achsstummels oder an der vom Achsstummel abgewandten Seite der Traverse angeordnet. Der Achsstummel ist zumindest bereichsweise rotationssymmetrisch um eine Stummelachse ausgebildet, wobei sich der Kanal ebenfalls vorzugsweise im Wesentlichen längs der Stummelachse, bevorzugt parallel zur Stummelachse erstreckt. Weiterhin bevorzugt ist das Achsrohr vorzugsweise bereichsweise rotationssymmetrisch um eine Rohrachse ausgebildet. Die wesentliche Funktion der Traverse ist dabei, das Achsrohr und den Achsstummel derart relativ zueinander anzuordnen, dass die Stummelachse und die Rohrachse voneinander beabstandet sind. Besonders bevorzugt verlaufen dabei die Rohrachse und die Stummelachse parallel zueinander, wodurch die erfindungsgemäße Achseinheit besonders einfach in bestehende Fahrwerkssysteme integriert werden kann. Die Beabstandung der Stummelachse und der Rohrachse sorgt mit Vorteil dafür, dass die Fluidanschlüsse an den Kanal nicht quer zur Stummelachse oder quer zur Rohrachse aus dem Achsstummel oder dem Achsrohr herausgeführt werden müssen und somit eine starke lokale Festigkeitsbeeinträchtigung vermieden wird. Es kann mit Vorteil erreicht werden, dass der Achsstummel, in welchem der Kanal eingebracht ist, besonders kurz ausgelegt ist und der dem ersten Anschlussabschnitt gegenüberliegende zweite Anschlussabschnitt nicht im Achsrohr, sondern auf der Stirnseite der Traverse oder des Achsstummels angeordnet ist. Es ergibt sich auf diese Weise eine besonders gute Erreichbarkeit der Anschlüsse, um den Kanal mit Hydraulikfluid zu versorgen. Weiterhin bevorzugt ist es möglich, das Achsrohr als einfaches hohlkörperzylindrisches Rohr auszuführen, wodurch im Vergleich zu den aus dem Stand der Technik bekannten Achseinheiten das Gewicht deutlich reduziert werden kann. Es hat sich gezeigt, dass zur Erreichung der nötigen Festigkeit der Achsstummel als Vollkörper ausgeführt sein sollte, wobei der Kanal beispielsweise mittels eines spanenden Verfahrens oder vorzugsweise auch während des Gießens des Achskörpers in dem Achsstummel ausgebildet wird. Zur Gewichtsreduzierung der gesamten Achseinheit ist es dabei erwünscht, den Anteil der als Vollkörper ausgebildeten Bereiche der Achseinheit möglichst gering zu halten. Angesichts der Tatsache, dass die für die Einbringung des Kanals in die Achseinheit nötigen Schneidwerkzeuge nur noch die Länge des Achsstummels durchmessen müssen und nicht mehr, wie bisher, zumindest die Hälfte der Länge einer gesamten als Vollkörper ausgebildeten Achse, wird in diesem Punkt ebenfalls mit Vorteil die Fertigung der Achseinheit vereinfacht. Die im Wesentlichen rotationssymmetrische Ausbildung des Achsrohres um eine Rohrachse umfasst im Rahmen der vorliegenden Erfindung vorzugsweise auch Abweichungen des Achsrohres von der Kreisform, sodass im Rahmen der vorliegenden Erfindung beispielsweise auch ein Achsrohr verwendet werden kann, welches ebenensymmetrisch zu einer durch die Rohrachse verlaufenden Ebene ausgebildet ist oder beispielsweise ebenensymmetrisch zu zwei sich in der Rohrachse schneidenden Ebenen.

Erfindungsgemäß ist ein zweiter Anschlussabschnitt an dem Achsstummel oder der Traverse vorgesehen, wobei der zweite Anschlussabschnitt vorzugsweise eine Eingriffsgeometrie zur fluiddichten Verbindung mit dem Kanal aufweist. Der zweite Anschlussabschnitt kann dabei vorzugsweise als Hohlbolzen ausgebildet sein, welcher ein Außengewinde aufweist, welches in ein dazu korrespondierendes Innengewinde, welches in dem Kanal eingebracht ist, festlegbar ist. Dabei ist als Gewindeart sowohl des Innengewindes des Kanals als auch des Außengewindes des Hohlbolzens vorzugsweise ein selbstdichtendes ISO-Gewinde geeignet. Weiterhin bevorzugt umfasst der erste und der zweite Anschlussabschnitt Dichtungselemente, welche eine Leckage von Fluid wirksam verhindern. Alternativ bevorzugt kann der Anschlussabschnitt auch integral mit einer Hydraulikleitung ausgebildet sein, wobei die Hydraulikleitung mit dem Anschlussabschnitt in die entsprechende Eingriffsgeometrie des Kanals eingreift.

Vorzugsweise ist der zweite Anschlussabschnitt von außen zugänglich. Mit anderen Worten ist der zweite Anschlussabschnitt nicht durch die Traverse und/oder das Achsrohr verdeckt. Dabei ist der zweite Anschlussabschnitt mit Vorteil längs der Stummelachse zugänglich, um eine besonders einfache Montage der Achseinheit zu ermöglichen.

In einer weiteren bevorzugten Ausführungsform weist der Achsstummel an seinem dem ersten Anschlussabschnitt gegenüberliegenden Ende einen ersten Fügebereich auf, welcher zur Festlegung an einem korrespondierend ausgebildeten Fügebereich der Traverse ausgebildet ist, wobei der erste Fügebereich eine Erstreckung längs und/oder quer zu der Stummelachse aufweist. Als Erstreckung längs und quer der Stummelachse ist vorzugsweise eine kegelstumpfförmige, eine im Schnitt elliptische, oder vorzugsweise eine gestufte Außenfläche des ersten Fügebereiches definiert, welche sich sowohl längs der Stummelachse als auch quer zur Stummelachse erstreckt. Eine solche Eingriffsgeometrie des ersten Fügebereiches eignet sich insbesondere zur Herstellung einer stoffschlüssigen Verbindung zwischen dem Achsstummel und der Traverse mittels eines Reibschweißverfahrens. Dabei kann eine beispielsweise kegelstumpfförmig ausgebildete Außenfläche des ersten Fügebereiches in eine entsprechend korrespondierende Innenfläche einer vorzugsweise in die Traverse eingebrachten Aussparung oder eines Rücksprungs während des Reibschweißens zum einen zentriert werden und gleichzeitig eine möglichst gleichmäßige Anschmelzung erreichen. Mit einer gleichmäßigen Anschmelzung des entsprechenden Materials des Achsstummels und der Traverse lässt sich ein besonders festes Gefüge der Schweißzone erzeugen, welches in der Lage ist, die hohen Kräfte und Biegemomente, welche vom Achsstummel an die Traverse und schließlich auch an das Achsrohr übertragen werden, aufzunehmen. Eine elliptische Form des ersten Fügebereiches eignet sich insbesondere zur zunächst nur bereichsweisen Anschmelzung des Materials des Achsstummels im ersten Fügebereich, wodurch insbesondere die während des Reibschweißens benötigten Kräfte gering gehalten werden können und ausgehend von der zunächst nur punktuellen Anschmelzung sich die Zone geschmolzenen Materials gleichmäßig und kontinuierlich auf den gesamten Bereich zwischen dem ersten und dem zweiten Fügebereich verteilt. Bei einer gestuften Außengeometrie des ersten Fügebereiches ist vorzugsweise die axiale Position längs der Stummelachse mit hoher Genauigkeit einstellbar. Es versteht sich, dass im Rahmen der vorliegenden Erfindung auch Kombinationen beispielsweise eines elliptischen Querschnitts des ersten Fügebereiches und eines kegelstumpfförmigen Abschnitts sowie auch Kombinationen kegelstumpfförmiger oder elliptischer Abschnitte mit einem gestuften Bereich vorgesehen sein können.

Im Wesentlichen quer zur Stummelachse bedeutet im Rahmen der vorliegenden Erfindung, dass der erste Fügebereich vorzugsweise eine senkrechte Haupterstreckung relativ zur Stummelachse aufweist. Dabei sind im Rahmen der vorliegenden Erfindung kleinere beispielsweise fertigungsbedingte Abweichungen von der senkrechten Erstreckung relativ zur Stummelachse zulässig. Bei dieser bevorzugten Ausführungsform wird der Achsstummel vorzugsweise stirnseitig an seiner Stirnfläche, welche im Wesentlichen eben ausgebildet ist, gegen die Traverse gepresst und an dieser beispielsweise durch Schweißen oder Reibschweißen festgelegt. Vorteilhaft ist diese Ausführungsform, da keine entsprechend korrespondierende Eingriffsgeometrie an der Traverse vorgesehen sein muss und somit eine Positionierung des Achsstummels relativ zur Traverse flexibel gestaltet ist. Es ist bei dieser bevorzugten Ausführungsform möglich, mit ein und derselben Traverse und ein und demselben Achsstummel verschieden ausgebildete Achseinheiten herzustellen, wodurch die vielseitige Einsetzbarkeit des Achsstummels und der Traverse erhöht werden kann. Weiterhin wird durch die im Wesentlichen senkrechte Ausbildung des Fügebereiches des Achsstummels die Herstellung vereinfacht, da nicht erst eine elliptische, kegelstumpfförmige oder anderweitige Geometrie hergestellt werden muss.

In einer bevorzugten Ausführungsform ist der zweite Anschlussabschnitt am Achsstummel angeordnet. Bevorzugt ist nicht nur der erste Anschlussabschnitt, sondern auch der zweite Anschlussabschnitt direkt am Achsstummel angeordnet. Hierbei vereinfacht sich die Fertigung beziehungsweise Montage der Achseinheit, da der erste und der zweite Anschlussabschnitt bereits am Achsstummel vormontiert sein können und lediglich die Verbindung zwischen Achsstummel und der Traverse hergestellt wird um die Achseinheit zu montieren. Es versteht sich in diesem Zusammenhang, dass die Traverse vorzugsweise eine entsprechende Aussparung aufweist, durch welche der zweite Anschlussabschnitt durch die Traverse hindurch zugänglich ist. Die Fertigung des Achsstummels kann auf diese Weise besonders einfach gestaltet werden, da der Achsstummel bereits während seiner Herstellung mit dem Kanal und den Anschlüssen ausgestattet wird und anschließend lediglich beispielsweise mittels eines bevorzugten Reibschweißverfahrens an der Traverse festgelegt wird.

Alternativ bevorzugt ist der zweite Anschlussabschnitt an der Traverse angeordnet. In dem bevorzugten Fall, dass eine möglichst vollflächige Verbindung zwischen der Traverse und dem Achsstummel in dem entsprechenden ersten und zweiten Fügebereich erwünscht ist, um hohe Festigkeit zu erzielen, werden mit Vorteil sowohl der Kanal als auch der erste und der zweite Anschlussabschnitt erst nach dem Zusammenfügen des Achsstummels mit der Traverse in die Achseinheit eingebracht. In diesem Fall erstreckt sich der Kanal vorzugsweise über den Achsstummel hinaus auch durch die Traverse, wobei vorteilhafterweise der erste Anschlussabschnitt am Achsstummel angeordnet ist und der entsprechend gegenüberliegende, zweite Anschlussabschnitt an der Traverse. Der Vorteil dieser Ausführungsform ist, dass zum einen die mögliche Befestigungsfläche zwischen Achsstummel und Traverse besonders groß ausgebildet ist und zum anderen durch die nachträgliche Einbringung des Kanals beispielsweise mittels eines schneidenden Verfahrens der Kanal und die Anschlüsse mit besonders hoher Fertigungsgenauigkeit ausgeführt sein können. Vorzugsweise werden hierbei die Anschlüsse und der Kanal nicht durch nachträgliche durch ein Schweißverfahren verursachte Thermospannungen verformt oder beschädigt. Insbesondere beim Umgang mit unter hohem Druck stehendem Hydraulikfluid ist diese Ausführungsform vorteilhaft, da durch die hohe Fertigungsgenauigkeit auch eine hohe Dichtigkeit sowohl des Kanals als auch des ersten und des zweiten Anschlussabschnitts erreichbar ist.

Weiterhin bevorzugt sind der Kanal und/oder der zweite Anschlussabschnitt beabstandet vom ersten Fügebereich und vom zweiten Fügebereich angeordnet. Insbesondere zur Vermeidung von Beschädigung des Kanals und/oder des zweiten Anschlussabschnitts ist dieser mit Vorteil beabstandet vom ersten Fügebereich und vom zweiten Fügebereich angeordnet. Auf diese Weise kann vermieden werden, dass Thermospannungen, welche durch das Schweißen des Achsstummels an die Traverse im ersten beziehungsweise zweiten Fügebereich verursacht werden, die Wände des Kanals und/oder die entsprechenden Materialbereiche des zweiten Anschlussabschnitts beeinträchtigen oder gar schädigen. In einer besonders bevorzugten Ausführungsform sind sowohl der erste Fügebereich als auch der zweite Fügebereich im Wesentlichen kreisringförmig ausgebildet, wobei der Bereich, in dem sich der zweite Anschlussabschnitt befindet, in der Mitte des Kreisrings angeordnet ist und vorzugsweise einen Sicherheitsabstand zum ersten beziehungsweise zweiten Fügebereich aufweist.

Besonders bevorzugt weist der Achsstummel einen Befestigungsabschnitt zur Festlegung einer Antriebseinheit auf, wobei der Befestigungsabschnitt vorzugsweise benachbart zum ersten Anschlussabschnitt angeordnet ist. Der Befestigungsabschnitt zeichnet sich insbesondere durch eine Eingriffsgeometrie für die Kraftübertragung und Momentenübertragung einer Antriebseinheit auf ein am Achsstummel drehbar gelagertes Rad oder eine am Achsstummel gelagerte Radnabe aus. Bevorzugt stützt sich die Antriebseinheit mit ihrem nicht rotierenden Teil am Achsstummel ab. Der Befestigungsabschnitt weist vorteilhafterweise eine nicht rotationssymmetrisch um die Stummelachse ausgebildete Querschnittsgeometrie auf. Weiterhin bevorzugt ist der Befestigungsabschnitt benachbart zum Anschlussabschnitt angeordnet, um insbesondere die Antriebseinheit vorteilhafterweise möglichst direkt und ohne weitere Hydraulikleitungen mit dem ersten Anschlussabschnitt fluiddicht zu verbinden. Es kann auf diese Weise wiederum Gewicht gespart und der Montageaufwand verringert werden.

In einer weiteren bevorzugten Ausführungsform ist ein Stützelement vorgesehen, welches an der Traverse und/oder an dem Achsstummel und/oder dem Achsrohr festlegbar ist, um Kräfte und Biegemomente zwischen der Traverse und dem Achsstummel oder der Traverse und dem Achsrohr aufzunehmen. Das Stützelement ist mit anderen Worten eine Rippe und ist außerhalb des ersten und des zweiten Fügebereiches mit dem Achsstummel und der Traverse oder alternativ hierzu mit dem Achsrohr und der Traverse verbunden. Das Stützelement kann dabei insbesondere dazu eingesetzt werden, Kräfte und Biegemomente, welche vom Achsstummel über die Traverse auf das Achsrohr übertragen werden, aufzunehmen. Mit anderen Worten unterstützt das Stützelement somit die Festlegung des Achsstummels an der Traverse und/oder vorzugsweise auch die Festlegung des Achsrohres an der Traverse über die jeweiligen Fügebereiche zwischen Achsstummel und Traverse und Achsrohr und Traverse hinaus. Insbesondere bevorzugt ist dabei das Stützelement derart angeordnet, dass Biegemomente aufgenommen werden können, welche bei einer Bremsung des Nutzfahrzeuges auftreten und entsprechend um eine quer zur Stummelachse verlaufende zusätzliche Materialbeanspruchung durch die Bremskraft verursachen. Dabei ist es bevorzugt, dass das Stützelement möglichst dünnwandig ausgebildet ist, um die durch das Verwenden eines Stützelements auftretende Gewichtszunahme möglichst in einem geringen Umfang zu halten.

In einer bevorzugten Ausführungsform ist der Achsstummel als Vollkörper ausgebildet und der Kanal mittels eines Spanverfahrens in den Achsstummel eingebracht. Als Vollkörper wird in diesem Zusammenhang insbesondere ein nicht als Hohlkörper ausgelegter Achsstummel definiert, wobei vorzugsweise der einzige hohle Abschnitt des Achsstummels der Kanal ist. Als Spanverfahren, um den Kanal in den Achsstummel einzubringen, eignet sich vorzugsweise ein Stirnfräsverfahren, wobei alternativ bevorzugt beispielsweise auch Senkerodieren zum Einsatz gelangen kann. Die Ausbildung des Achsstummels als Vollkörper ist auch dahingehend vorteilhaft, dass keine zusätzlichen Rohrelemente in einen als Hohlkörper ausgebildeten Achsstummel eingebracht werden müssen und somit der Montageaufwand verringert ist.

Vorzugsweise ist der Kanal fluiddicht mit einem in der Traverse vorgesehenen Traverskanal oder mit einem an der Traverse vorgesehenen zweiten Anschlussabschnitt verbunden. Mit anderen Worten erstreckt sich der für das Hydraulikfluid zur Verfügung stehende Raum in dem Kanal sowie in einem benachbart dazu und fluiddicht verbundenen Traverskanal, wobei im Bereich des Traverskanals mit Vorteil die entsprechenden zweiten Anschlussabschnitte mit ihren Eingriffsgeometrien vorgesehen sein können. Der Traverskanal ist dabei im Rahmen der vorliegenden Erfindung als Teil oder als Erweiterung des Kanals im Achsstummel zu verstehen, wobei der zweite Anschlussabschnitt im Falle des Vorhandenseins eines Traverskanals an letzteren grenzt.

In einer alternativ bevorzugten Ausführungsform ist der Kanal in einem im Achsstummel angeordneten Hülsenelement vorgesehen. In diesem Fall ist in den Achsstummel eine Bohrung eingebracht, in welche ein Hülsenelement, das heißt mit anderen Worten ein Rohr, einsteckbar und am Achsstummel festlegbar ist, wobei der Kanal mit Vorteil im Inneren des Hülsenelements angeordnet ist. Diese Ausführungsform kann sich als vorteilhaft erweisen, wenn als Hydraulikfluid eine Flüssigkeit zum Einsatz kommen soll, welche das Material des Achsstummels schädigen könnte. So kann die Hülse vorteilhafterweise aus korrosionsbeständigem Edelstahl oder einer ähnlichen Beschichtung ausgebildet sein. Weiterhin bevorzugt ist die Hülse eine im Inneren einer Bohrung im Achsstummel aufgebrachte Beschichtung. Darüber hinaus erstreckt sich die Hülse vorzugsweise in einer Bohrung des Achsstummels sowie in einer Bohrung des Traverskanals und ist jeweils an ihren Enden mit einem ersten und an dem jeweils gegenüberliegenden Ende mit einem zweiten Anschlussabschnitt ausgestattet. Bei dieser vorteilhaften Ausführungsform entfällt die Notwendigkeit einer Abdichtung des Bereiches zwischen dem Achsstummel und der Traverse, da der Kanal vollständig in einer einstückig ausgebildeten Hülse angeordnet ist.

In einer ferner bevorzugten Ausführungsform ist der Achsstummel gemeinsam mit dem Kanal als Gusskörper ausgebildet. Für eine besonders einfache Fertigung des Achsstummels ist es bevorzugt, dass bereits während des Gießverfahrens der Kanal im Achsstummel vorgesehen wird. Bei dieser bevorzugten Ausführungsform entfällt die nachträgliche spanende Bearbeitung des Achsstummels. Es kann auf diese Weise die für die Herstellung des Achsstummels benötigte Zeit und somit die für die Herstellung der Achseinheit benötigte Zeit reduziert werden.

In einer weiteren bevorzugten Ausführungsform weist der Achsstummel eine Vielzahl von Kanälen auf, wobei eine Vielzahl von ersten Anschlussabschnitten und zweiten Anschlussabschnitten mit jeweils einem Kanal oder mit mehreren Kanälen in fluidleitender Verbindung stehen. Für die Versorgung einer Antriebseinheit sind vorteilhafterweise zumindest zwei Kanäle vorgesehen, von denen einer der Strömung des Fluids in Richtung der Antriebseinheit und der jeweils andere zur Zurückströmung des Hydraulikfluids in Richtung der Pumpvorrichtung ausgelegt ist. Es hat sich hierbei als vorteilhaft erwiesen, dass der Kanal, durch welchen das Fluid mit dem höheren Druck fließt, in einem Querschnitt quer zur Stummelachse gesehen, die jeweils größeren Wandstärken als die übrigen Kanäle des Achsstummels aufweist. Zur Vereinfachung des Anschließens von Hydraulikfluidleitungen an die Achseinheit ist es bevorzugt, dass ein erster und/oder ein zweiter Anschlussabschnitt vorgesehen sind, welcher mit jeweils zwei oder mehreren Kanälen in fluidleitender Verbindung steht. Auf diese Weise kann beispielsweise mit einer Zuleitung eine Vielzahl von Abnehmern von Hydraulikfluid versorgt werden. Insbesondere bevorzugt ist eine Ausführungsform mit vier Kanälen, von denen zwei Kanäle als Druckleitungen, ein Kanal als Rückführungsleitung und ein Kanal als Thermoleitung, zur Einleitung erwärmten Hydraulikfluids in die Antriebseinheit fungiert.

Mit Vorteil stehen die Rohrachse und die Stummelachse im Wesentlichen parallel zueinander. Durch die parallele Ausrichtung der Rohrachse und der Stummelachse zueinander ist es insbesondere möglich, die vorliegende Achseinheit in bereits bestehende Fahrwerksysteme von Nutzfahrzeugen zu integrieren, da vorteilhafterweise das Achsrohr der vorliegenden Erfindung in den Einbaupositionen verwendet werden kann wie ein als Vollkörper ausgebildeter Achskörper.

Besonders bevorzugt ist das Achsrohr an der Traverse verschweißt, vorzugsweise mittels eines Reibschweißverfahrens. Um die im Betrieb der Achseinheit auftretenden Kräfte und Biegemomente vom Achsrohr auf die Traverse übertragen zu können, ist eine Schweißverbindung bevorzugt. Ein gewöhnliches thermisches Schweißverfahren wie beispielsweise Lichtbogenschweißen oder Schutzgassschweißen eignet sich dabei insbesondere zur Verschweißung von nicht rotationssymmetrischen Geometrien entweder der Traverse und/oder des Achsrohres. Weiterhin könnte vorzugsweise ein entsprechender Vorsprung am Achsrohr oder der Traverse mit einem entsprechenden Rücksprung am jeweils anderen Bauteil vorgesehen sein, wobei das Achsrohr und die Traverse zunächst formschlüssig aneinandergefügt und anschließend durch Unterstützung einer Schweißverbindung stoffschlüssig aneinander festgelegt werden. Das Reibschweißen eignet sich insbesondere zur Herstellung der Verbindung zwischen Achsrohr und Traverse, da das im Wesentlichen rotationssymmetrisch ausgebildete Achsrohr rotierend gegen die Traverse gepresst werden kann und auf diese Weise eine gleichmäßige Anschmelzung und im Vergleich zum thermischen Schweißen nur relativ geringe Thermospannungen erreicht werden können.

In einer besonders bevorzugten Ausführungsform sind die Rohrachse und die Stummelachse um einen Versatz voneinander beabstandet, wobei der Versatz in einem Verhältnis von 0,2 bis 2, vorzugsweise 0,3 bis 1,5 und besonders bevorzugt von 0,8 bis 1 zu einer Stummellänge des Achsstummels steht. Die Stummellänge des Achsstummels ist dabei vorzugsweise die maximale Erstreckung des Achsstummels längs der Stummelachse. Die Rohrachse und die Stummelachse verlaufen vorzugsweise parallel zueinander und mit einem Versatz voneinander beabstandet. Es hat sich als vorteilhaft erwiesen, das Verhältnis des Versatzes zur Stummellänge in einem Bereich von 0,2 bis 2 zu halten, da auf diese Weise zum einen eine besonders gute Erreichbarkeit des zweiten Anschlussabschnitts gewährleistet ist und zum anderen die Verbindung aus Achsrohr, Traverse und Achsstummel geeignet ist, besonders hohe Kräfte und Biegemomente zu übertragen, da die entsprechenden Hebelarm ein den bevorzugten Grenzen gehalten werden. Der Verhältnisbereich von 0,3 bis 1,5 erzielte dabei insbesondere für den Einsatz in Nutzfahrzeuganhängern besonders gute Werte, da zum einen eine entsprechend hohe Flexibilität der Anbindungsmöglichkeit des Achsstummels an der Traverse zur Verfügung steht und zum anderen durch den im Vergleich zur Stummellänge relativ großen Versatz ein relativ kompakter Achsstummel derart an der Traverse angeordnet werden kann, dass gleichzeitig eine besonders gute Erreichbarkeit der zweiten Anschlussabschnitte gegeben ist. Der besonders bevorzugte Bereich von 0,8 bis 1 hat sich als Optimum zum Einsatz in besonders hochbelasteten Nutzfahrzeugen herausgestellt, da hier zum einen die besonders hohe Festigkeit der Verbindung zwischen Achsstummel, Traverse und Achsrohr gewährleistet ist, zum anderen die Traverse nur relativ kurz beziehungsweise kompakt ausgelegt sein kann und somit in der Lage ist, höhere Kräfte und Biegemomente zu übertragen als dies bei einer besonders langen Traverse und einem besonders hohen Versatz von Stummelachse zu Rohrachse gegeben wäre.

Weitere Vorteile und Merkmale der vorliegenden Erfindung ergeben sich aus der nachfolgenden Beschreibung mit Bezug auf die beigefügten Figuren. Es versteht sich, dass einzelne in den Ausführungsformen beschriebene Merkmale auch in anderen Ausführungsformen zum Einsatz gelangen können, sofern dies nicht explizit ausgeschlossen ist oder sich aus technischen Gründen ergibt.

Es zeigen:
- Fig. 1: eine perspektivische Ansicht einer bevorzugten Ausführungsform der erfindungsgemäßen Achseinheit,
- Fig. 2: eine teilweise geschnittene Ansicht einer bevorzugten Ausführungsform einer erfindungsgemäßen Achseinheit,
- Fig. 3: eine weitere teilweise geschnittene Ansicht einer bevorzugten Ausführungsform der erfindungsgemäßen Achseinheit, und
- Fig. 4: eine weitere, teilweise geschnittene Ansicht einer bevorzugten Ausführungsform der erfindungsgemäßen Achseinheit.

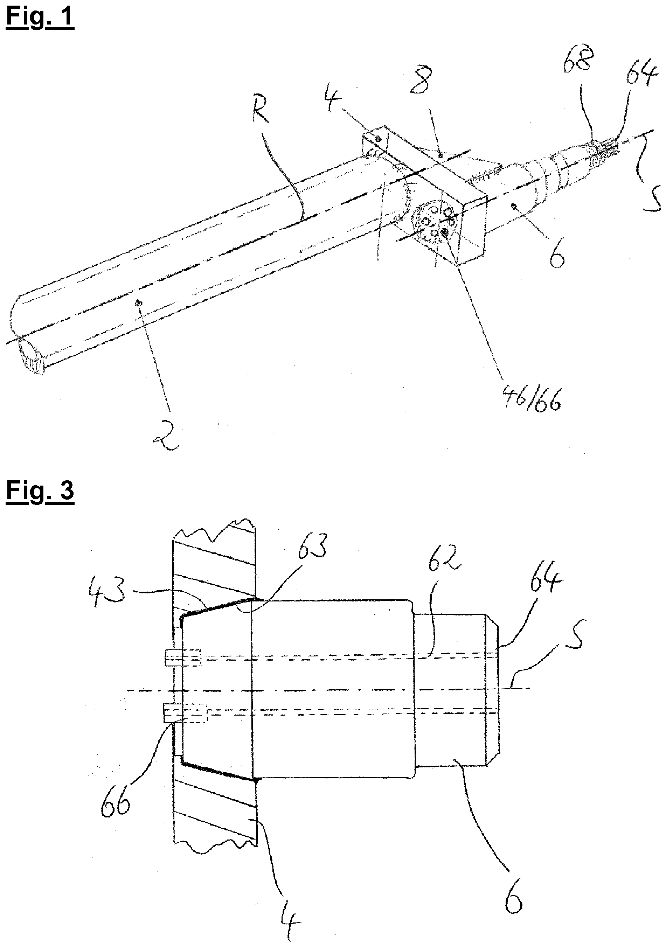

Fig. 1 zeigt schematisch vereinfacht und in perspektivischer Ansicht eine bevorzugte Ausführungsform der erfindungsgemäßen Achseinheit. Dabei ist ein Achsrohr 2 über eine Traverse 4 mit einem Achsstummel 6 verbunden. Das Achsrohr 2 erstreckt sich im Wesentlichen entlang einer Rohrachse R und ist mit Vorteil rotationssymmetrisch zu der Rohrachse R ausgebildet. Die Traverse 4 ist mit Vorteil plattenartig ausgebildet, wobei an einer ersten Seite der Traverse 4 das Achsrohr 2 festlegbar oder festgelegt ist. In der Figur angedeutet ist eine Schweißnaht zwischen dem Achsrohr 2 und der Traverse 4. Der Achsstummel 6 erstreckt sich im Wesentlichen entlang einer Stummelachse S und ist zumindest bereichsweise rotationssymmetrisch um die Stummelachse S ausgebildet. Dabei ist der Achsstummel 6 auf der dem Achsrohr 2 abgewandten Seite der Traverse 4 an der Traverse festlegbar oder festgelegt. Weiterhin bevorzugt weist die Achseinheit einen zweiten Anschlussabschnitt 46, 66 auf, welcher entweder an der Traverse 4 oder an dem Achsstummel 6 angeordnet ist. Bei der in der vorliegenden Figur dargestellten Ausführungsform ist der zweite Anschlussabschnitt 46 an der Traverse 4 angeordnet. Zur Unterstützung der Verbindung zwischen dem Achsstummel 6 und der Traverse 4 ist weiterhin ein Stützelement 8 vorgesehen, welches mit Vorteil sowohl am Achsstummel 6 als auch an der Traverse 4 festgeschweißt ist. Der Achsstummel 6 weist mit Vorteil einen Befestigungsabschnitt 68 auf, welcher dafür ausgelegt ist, eine nicht gezeigte Antriebseinheit drehfest an dem Achsstummel 6 festzulegen. Benachbart zum Befestigungsabschnitt ist vorzugsweise ein erster Anschlussabschnitt 64 am Achsstummel 6 vorgesehen. Der Anschlussabschnitt 64 ist mit zumindest einem Kanal 62 (nicht gezeigt) fluiddicht verbunden.

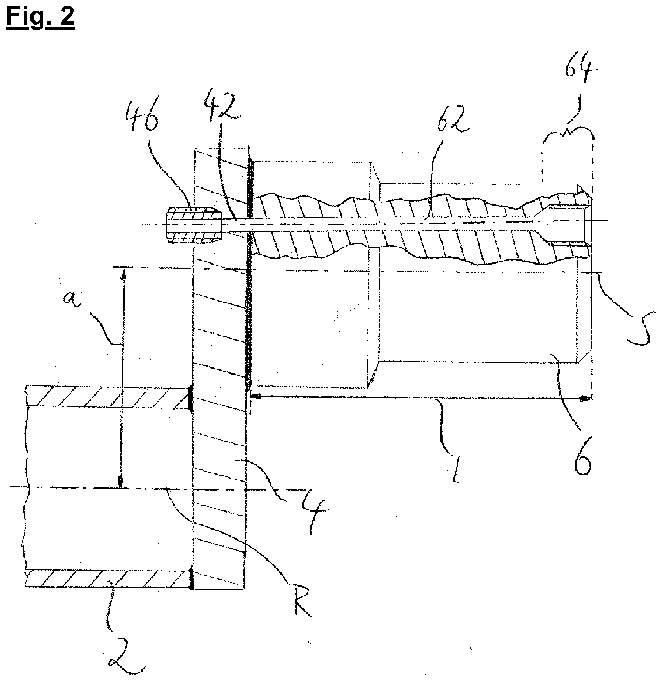

Fig. 2 zeigt eine teilweise geschnittene Ansicht einer bevorzugten Ausführungsform der erfindungsgemäßen Achseinheit. Wesentliche Merkmale der in Fig. 2 gezeigten Ausführungsform entsprechen dabei der in Fig. 1 gezeigten Ausführungsform. Der Achsstummel 6 ist bereichsweise geschnitten dargestellt, wobei deutlich der Verlauf des im Achsstummel 6 angeordneten Kanals 62 und der an den jeweiligen Enden des Kanals vorgesehenen Anschlussabschnitte (64, 46) verdeutlicht ist. Dabei ist der im Achsstummel 6 verlaufende Teil des Kanals 62 sowie der in der Traverse verlaufende Traverskanal 42 dargestellt. Mit Vorteil ist der erste Anschlussabschnitt 64 als eine Gewindebohrung ausgeführt, in welche ein entsprechendes Anschlusselement einer Antriebseinheit eingebracht, festgelegt und fluiddicht mit dem Kanal 62 verbunden werden kann. Alternativ kann der erste Anschlussabschnitt 64 und/oder der zweite Anschlussabschnitt 46/66 als nach außen ragender Vorsprung ausgebildet sein, wobei dieser mit einem Außengewinde oder einem Bajonettanschluss ausgestattet direkt mit einem Hydraulikschlauch verbindbar ist. Weiterhin ist der bevorzugte Versatz a zwischen der Stummelachse S und der Rohrachse R dargestellt, welcher vorzugsweise in einem Verhältnis von 0,2 bis 2 zu einer Stummellänge I steht. Die Stummellänge I ist dargestellt als die maximale Erstreckung des Achsstummels 6 längs der Stummelachse S. Mit Vorteil ist der zweite Anschlussabschnitt 46 als mit einem Außengewinde ausgestatteter Hohlbolzen ausgeführt, welcher zum einen in Eingriff mit der Traverse 4 beziehungsweise einer in der Traverse 4 eingebrachten Bohrung bringbar ist und zum anderen der Festlegung einer Fluidleitung zur Verbindung mit einem entsprechenden Hydraulikflüssigkeitsreservoir geeignet ist. Durch die Anordnung des ersten Anschlussabschnitts 64 des Kanals 62 des Traverskanals 42 und des zweiten Anschlussabschnitts 46 längs einer Parallelen zur Stummelachse S kann insbesondere die Festigkeit des Achsstummels 6 erhöht werden, da keine quer zur Stummelachse S verlaufenden Bohrungen in dem Achsstummel 6 oder in der Traverse 4 eingebracht sind. Die längs der Stummelachse S verlaufenden Bohrungen schwächen dabei die Festigkeit des Achsstummels 6 in geringerem Maße als Bohrungen, welche quer zur Stummelachse S eingebracht sind.

Fig. 3 zeigt eine weitere bevorzugte Ausführungsform der erfindungsgemäßen Achseinheit, wobei der Achsstummel 6 zwei Kanäle 62 aufweist und wobei neben den ersten Anschlussabschnitten 64 auch die zweiten Anschlussabschnitte 66 an dem Achsstummel 6 vorgesehen sind. Im Unterschied zu den in Fig. 1 und 2 gezeigten Ausführungsformen weist der Achsstummel 6 einen Fügebereich 63 auf, welcher sich sowohl längs der Stummelachse S als auch quer zur Stummelachse S erstreckt. Mit anderen Worten ist der Fügebereich 63 des Achsstummels 6 vorzugsweise konisch ausgebildet, das heißt dass mit anderen Worten die Außenfläche des Fügebereiches 63 des Achsstummels 6 eine kegelstumpfförmige Geometrie aufweist. Weiterhin bevorzugt weist der Fügebereich 63 auch einen sich quer zur Stummelachse S erstreckenden Bereich auf, welcher in der vorliegend gezeigten Figur aber im Vergleich zum restlichen Fügebereich 63 sehr klein ist. Die Traverse 4 weist einen zweiten Fügebereich 43 auf, welcher vorzugsweise im Wesentlichen mit dem ersten Fügebereich 63 des Achsstummels 6 korrespondiert. Es versteht sich, dass bei der in Fig. 3 gezeigten Ausführungsform auf besonders günstige Weise der Achsstummel 6 rotierend von rechts her nach in der Figur links gegen die Traverse 4 gepresst werden kann und auf diese Weise eine Reibschweißverbindung zwischen der Traverse 4 und dem Achsstummel 6 jeweils im ersten Fügebereich 63 sowie im zweiten Fügebereich 43 erzeugt werden kann. Weiterhin ist das bevorzugte Merkmal der vorliegenden Erfindung gezeigt, dass der zweite Anschlussabschnitt 66 und der Kanal 62 von dem ersten Fügebereich 63 und dem zweiten Fügebereich 43 beabstandet angeordnet sind. Auf diese Weise kann die Beeinträchtigung des Kanals 62 sowie des zweiten Anschlussabschnitts 66 durch Thermospannungen, die während des Schweißens auftreten, besonders gering gehalten werden.

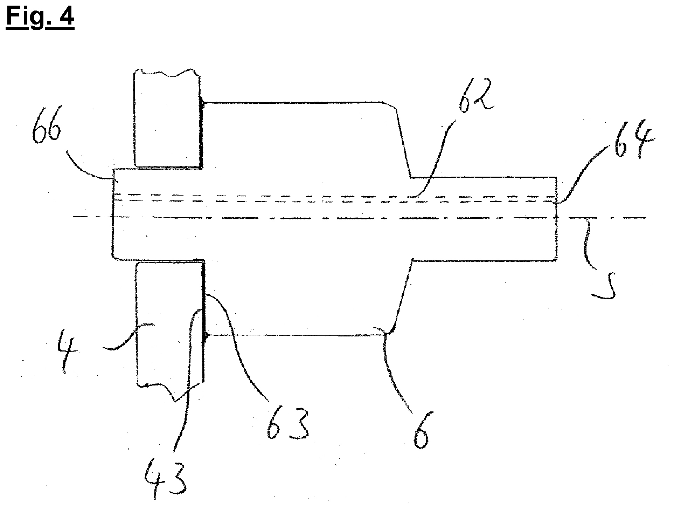

Fig. 4 zeigt eine weitere bevorzugte Ausführungsform der erfindungsgemäßen Achseinheit, wobei der Achsstummel 6 an seiner zur Traverse 4 hinweisenden Seite vorzugsweise eine gestufte Geometrie aufweist. Der erste Fügebereich 63 des Achsstummels 6 sowie der zweite Fügebereich 43 der Traverse 4 erstrecken sich dabei im Wesentlichen quer zur Stummelachse S. Wiederum ist gezeigt, dass sowohl der Kanal 62 als auch der erste Anschlussabschnitt 64 und der zweite Anschlussabschnitt 66 vollständig am Achsstummel 6 angeordnet sind und gleichzeitig vom Fügebereich 63 beziehungsweise 43 beabstandet sind. Mit Vorteil kann bei dieser Ausführungsform der Achsstummel gemeinsam mit dem Kanal 62 und den Anschlussabschnitten 64 und 66 vor dem Zusammenbau mit der Traverse 4 bereits komplett hergestellt werden, wodurch nicht nur ein relativ geringes Materialvolumen montiert werden muss und sich schon allein dadurch die Fertigung vereinfacht, sondern auch beispielsweise mehrere Kanäle 62 gleichzeitig durch Senkerodieren in den Achsstummel 6 eingebracht werden können. Der erste Anschlussabschnitt 64 und der zweite Anschlussabschnitt 66 sind dabei in der Figur nur relativ schematisch angedeutet und können beispielsweise wie in Fig. 2 skizziert ausgebildet sein. Der Vorteil der in Fig. 4 gezeigten Ausführungsform ist, dass der Achsstummel 6 und die Traverse 4 insbesondere längs der Stummelachse S besonders genau zueinander positioniert werden können. Weiterhin ist das in einer quer zur Stummelachse S stehenden Ebene liegende Flächenträgheitsmoment des Verbindungsbereiches zwischen Achsstummel 6 und Traverse 4 aufgrund der großen Durchmesser besonders hoch, sodass die Verbindung zwischen Achsstummel 6 und Traverse 4 besonders gut geeignet ist, hohe Biegemomente und Torsionsmomente zwischen Achsstummel 6 und Traverse 4 zu übertragen.

### Bezuqszeichen:

- 2: - Achsrohr
- 4: - Traverse
- 42: - Traverskanal
- 43: - zweiter Fügebereich
- 46: - zweiter Anschlussabschnitt (an der Traverse)
- 6: - Achsstummel
- 62: - Kanal
- 63: - erster Fügebereich
- 64: - erster Anschlussabschnitt
- 66: - zweiter Anschlussabschnitt (am Achsstummel)
- 68: - Befestigungsabschnitt
- 8: - Stützelement
- R: - Rohrachse
- S: - Stummelachse
- a: - Versatz
- I: - Stummellänge

## Patentansprüche

1. Achseinheit umfassend ein Achsrohr (2) und einen Achsstummel (6), wobei der Achsstummel (6) bereichsweise rotationssymmetrisch zu einer Stummelachse (S) ausgebildet ist und einen Kanal (62) aufweist, welcher sich im Wesentlichen parallel zur Stummelachse (S) erstreckt,
wobei der Achsstummel (6) einen ersten Anschlussabschnitt (64) aufweist, welcher eine Eingriffsgeometrie zur fluiddichten Verbindung mit dem Kanal (62) aufweist,
**dadurch gekennzeichnet dass**, das Achsrohr (2) im Wesentlichen rotationssymmetrisch um eine Rohrachse (R) ausgebildet ist,
wobei das Achsrohr (2) und der Achsstummel (6) über eine Traverse (4) derart zueinander festgelegt sind, dass die Rohrachse (R) und die Stummelachse (S) voneinander beabstandet sind,
wobei ein dem ersten Anschlussabschnitt (64) gegenüberliegender zweiter Anschlussabschnitt (46, 66) vorgesehen ist, der auf der Stirnseite der Traverse (4) oder des Achsstummels (6) angeordnet ist.

2. Achseinheit nach Anspruch 1,
wobei der zweite Anschlussabschnitt (46, 66) eine Eingriffsgeometrie zur fluiddichten Verbindung mit dem Kanal (62) aufweist.

3. Achseinheit nach Anspruch 2,
wobei der zweite Anschlussabschnitt (46, 66) von außen zugänglich ist.

4. Achseinheit nach einem der vorhergehenden Ansprüche,
wobei der Achsstummel (6) an seinem dem ersten Anschlussabschnitt (64) gegenüberliegenden Ende einen ersten Fügebereich (63) aufweist, welcher zur Festlegung an einem korrespondierend ausgebildeten zweiten Fügebereich (43) der Traverse (4) ausgebildet ist,
wobei der erste Fügebereich (63) vorzugsweise eine Erstreckung längs und/oder quer zu der Stummelachse (S) aufweist.

5. Achseinheit nach einem der Ansprüche 2 bis 4,
wobei der zweite Anschlussabschnitt (46) an der Traverse (4) angeordnet ist.

6. Achseinheit nach einem der Ansprüche 2 bis 4,
wobei der zweite Anschlussabschnitt (66) am Achsstummel (6) angeordnet ist.

7. Achseinheit nach einem der Ansprüche 3 bis 6,
wobei der Kanal (62) und/oder der zweite Anschlussabschnitt (46, 66) beabstandet vom ersten Fügebereich (63) und vom zweiten Fügebereich (43) angeordnet ist.

8. Achseinheit nach einem der vorhergehenden Ansprüche,
wobei der Achsstummel (6) einen Befestigungsabschnitt (68) zur Festlegung einer Antriebseinheit aufweist,
wobei der Befestigungsabschnitt (68) vorzugsweise benachbart zum ersten Anschlussabschnitt (64) angeordnet ist.

9. Achseinheit nach einem der vorhergehenden Ansprüche,
wobei ein Stützelement (8) vorgesehen ist, welches an der Traverse (4) und an dem Achsstummel (6) oder dem Achsrohr (2) festlegbar ist um Kräfte und Biegemomente zwischen der Traverse (4) und dem Achsstummel (6) oder der Traverse (4) und dem Achsrohr (2) aufzunehmen.

10. Achseinheit nach einem der Ansprüche 2 bis 4 und 6 bis 9,
wobei der Kanal (62) fluiddicht mit einem in der Traverse (4) vorgesehenen Traverskanal (42) oder mit einem an der Traverse (4) vorgesehenen zweiten Anschlussabschnitt (46) verbunden ist.

11. Achseinheit nach einem der Ansprüche 1 bis 10,
wobei der Kanal (62) in einem im Achsstummel (6) angeordneten Hülsenelement (8) vorgesehen ist.

12. Achseinheit nach einem der Ansprüche 1 bis 10,
wobei der Achsstummel (6) gemeinsam mit dem Kanal (62) als Gußkörper ausgebildet ist.

13. Achseinheit nach einem der vorhergehenden Ansprüche,
wobei der Achsstummel (6) eine Vielzahl von Kanälen (62) aufweist, wobei eine Vielzahl von ersten Anschlussabschnitten (64) und zweiten Anschlussabschnitten (46, 66) mit jeweils einem Kanal (62) oder mit mehreren Kanälen (62) in fluidleitender Verbindung stehen.

14. Achseinheit nach einem der vorhergehenden Ansprüche,
wobei das Achsrohr (2) an der Traverse (4) verschweißt ist, vorzugsweise mittels eines Reibschweißverfahrens.

15. Achseinheit nach einem der vorhergehenden Ansprüche,
wobei die Rohrachse (R) und die Stummelachse (S) um einen Versatz (a) voneinander beabstandet sind,
wobei der Versatz (a) in einem Verhältnis von 0,2 bis 2, vorzugsweise 0,3 bis 1,5 und besonders bevorzugt von ca. 0,8 bis 1 zu einer Stummellänge (I) des Achsstummels (6) steht.

## Claims

1. An axle unit comprising an axle tube (2) and an axle stub (6), wherein the axle stub (6) is formed to be rotationally symmetrical with respect to a stub axis (S) in some regions and has a channel (62) which extends substantially parallel to the stub axis (S),
wherein the axle stub (6) has a first connection portion (64) which has an engagement geometry for fluid-tight connection to the channel (62), **characterized by** the axle tube (2) is formed to be substantially rotationally symmetrical about a tube axis (R),
wherein the axle tube (2) and the axle stub (6) are fixed to one another by way of a cross-member (4) in such a way that the tube axis (R) and the stub axis (S) are spaced from one another,
wherein a second connection portion (46, 66) opposite the first connection portion (64) is provided, which is arranged on the end face of the cross-member (4) or the axle stub (6).

2. The axle unit as claimed in claim 1,
wherein the second connection portion (46, 66) has an engagement geometry for fluid-tight connection to the channel (62).

3. The axle unit as claimed in claim 2,
wherein the second connection portion (46, 66) is accessible from the outside.

4. The axle unit as claimed in one of the preceding claims,
wherein the axle stub (6) has, at its end opposite the first connection portion (64), a first joining region (63) which is formed for fixing on a correspondingly formed second joining region (43) of the cross-member (4),
wherein the first joining region (63) especially has an extent along and/or transversely to the stub axis (S).

5. The axle unit as claimed in one of claims 2 to 4, wherein the second connection portion (46) is arranged on the cross-member (4).

6. The axle unit as claimed in one of claims 2 to 4,
wherein the second connection portion (66) is arranged on the axle stub (6).

7. The axle unit as claimed in one of claims 3 to 6,
wherein the channel (62) and/or the second connection portion (46, 66) are arranged spaced from the first joining region (63) and from the second joining region (43).

8. The axle unit as claimed in one of the preceding claims,
wherein the axle stub (6) has a fastening portion (68) for fixing a drive unit in place,
wherein the fastening portion (68) is especially arranged adjacent to the first connection portion (64).

9. The axle unit as claimed in one of the preceding claims,
wherein a supporting element (8) is provided, which may be fixed on the cross-member (4) and on the axle stub (6) or the axle tube (2) in order to absorb forces and bending moments between the cross-member (4) and the axle stub (6) or the cross-member (4) and the axle tube (2).

10. The axle unit as claimed in one of claims 2 to 4 and 6 to 9,
wherein the channel (62) is connected in a fluid-tight manner to a cross-member channel (42) provided in the
cross-member (4) or to a second connection portion (46) provided on the cross-member (4).

11. The axle unit as claimed in one of claims 1 to 10,
wherein the channel (62) is provided in a sleeve element (8) arranged in the axle stub (6).

12. The axle unit as claimed in one of claims 1 to 10,
wherein the axle stub (6) is formed together with the channel (62) as a cast body.

13. The axle unit as claimed in one of the preceding claims,
wherein the axle stub (6) has a plurality of channels (62),
wherein a plurality of first connection portions (64) and second connection portions (46, 66) are in fluid-conducting communication with a respective channel (62) or with multiple channels (62).

14. The axle unit as claimed in one of the preceding claims,
wherein the axle tube (2) is welded to the cross-member (4), especially by means of a friction welding process.

15. The axle unit as claimed in one of the preceding claims,
wherein the tube axis (R) and the stub axis (S) are spaced from one another by an offset (a),
wherein the ratio of the offset (a) to a stub length (I) of the axle stub (6) is 0.2 to 2, especially 0.3 to 1.5 and, particularly preferably, ca. 0.8 to 1.

## Revendications

1. Ensemble d'essieu comportant un tube d'essieu (2) et une fusée d'essieu (6),
la fusée d'essieu (6) étant réalisée localement à symétrie de révolution par rapport à un axe de fusée (S) et comprenant un canal (62) qui s'étend sensiblement parallèlement à l'axe de fusée (S),
la fusée d'essieu (6) présentant une première portion de raccordement (64) qui présente une géométrie d'engagement pour la liaison étanche aux fluides avec le canal (62),
**caractérisé en ce que**
le tube d'essieu (2) est réalisé sensiblement à symétrie de révolution autour d'un axe de tube (R),
le tube d'essieu (2) et la fusée d'essieu (6) sont immobilisés l'un par rapport à l'autre par une traverse (4), de telle sorte que l'axe de tube (R) et l'axe de fusée (S) sont espacés l'un de l'autre, et
il est prévu une seconde portion de raccordement (46, 66) opposée à la première portion de raccordement (64) et agencée sur la face frontale de la traverse (4) ou de la fusée d'essieu (6).

2. Ensemble d'essieu selon la revendication 1,
dans lequel
la seconde portion de raccordement (46, 66) présente une géométrie d'engagement pour la liaison étanche aux fluides avec le canal (62).

3. Ensemble d'essieu selon la revendication 2,
dans lequel
la seconde portion de raccordement (46, 66) est accessible depuis l'extérieur.

4. Ensemble d'essieu selon l'une des revendications précédentes,
dans lequel
à son extrémité opposée à la première portion de raccordement (64), la fusée d'essieu (6) présente une première zone d'assemblage (63) qui est réalisée pour l'immobiliser sur une seconde zone d'assemblage (43) de la traverse (4) réalisée en correspondance,
la première zone d'assemblage (63) présentant de préférence une extension le long de l'axe de fusée (S) et/ou transversalement à celui-ci.

5. Ensemble d'essieu selon l'une des revendications 2 à 4,
dans lequel
la seconde portion de raccordement (46) est agencée sur la traverse (4).

6. Ensemble d'essieu selon l'une des revendications 2 à 4,
dans lequel
la seconde portion de raccordement (66) est agencée sur la fusée d'essieu (6).

7. Ensemble d'essieu selon l'une des revendications 3 à 6,
dans lequel
le canal (62) et/ou la seconde portion de raccordement (46, 66) est agencé(e) à distance de la première zone d'assemblage (63) et de la seconde zone d'assemblage (43).

8. Ensemble d'essieu selon l'une des revendications précédentes,
dans lequel
la fusée d'essieu (6) présente une portion de fixation (68) pour l'immobiliser sur une unité d'entraînement,
la portion de fixation (68) étant agencée de préférence au voisinage de la première portion de raccordement (64).

9. Ensemble d'essieu selon l'une des revendications précédentes,
dans lequel
il est prévu un élément de soutien (8) qui est susceptible d'être immobilisé sur la traverse (4) et sur la fusée d'essieu (6) ou sur le tube d'essieu (2) pour encaisser des forces et des couples de flexion entre la traverse (4) et la fusée d'essieu (6) ou entre la traverse (4) et le tube d'essieu (2).

10. Ensemble d'essieu selon l'une des revendications 2 à 4 et 6 à 9,
dans lequel
le canal (62) est relié de façon étanche aux fluides à un canal de traverse (42) prévu dans la traverse (4) ou à une seconde portion de raccordement (46) prévue sur la traverse (4).

11. Ensemble d'essieu selon l'une des revendications 1 à 10,
dans lequel
le canal (62) est prévu dans un élément formant douille (8) agencé dans la fusée d'essieu (6).

12. Ensemble d'essieu selon l'une des revendications 1 à 10,
dans lequel
la fusée d'essieu (6) est réalisée conjointement avec le canal (62) sous forme de corps de fonderie.

13. Ensemble d'essieu selon l'une des revendications précédentes,
dans lequel
la fusée d'essieu (6) présente une multitude de canaux (62), et
une multitude de premières portions de raccordement (64) et de secondes portions de raccordement (46, 66) sont chacune en liaison de conduction de fluide avec un canal (62) ou avec plusieurs canaux (62).

14. Ensemble d'essieu selon l'une des revendications précédentes,
dans lequel
le tube d'essieu (2) est soudé sur la traverse (4), de préférence au moyen d'un procédé de soudage par friction.

15. Ensemble d'essieu selon l'une des revendications précédentes,
dans lequel
l'axe de tube (R) et l'axe de fusée (S) sont espacés d'un décalage (a) l'un de l'autre,
le décalage (a) étant dans une relation de 0,2 à 2, de préférence de 0,3 à 1,5 et de manière particulièrement préférée d'environ 0,8 à 1 par rapport à une longueur de fusée (I) de la fusée d'essieu (6).
